# EUROPEAN PATENT SPECIFICATION

(11) **EP 4 113 460 B1**
(45) Date of publication and mention of the grant of the patent: **14.10.2026**
(21) Application number: 21182320.8
(22) Date of filing: 29.06.2021
(51) Int. Cl.: G06V 20/58, G06V 20/56

(54) **DRIVER ASSISTANCE SYSTEM AND METHOD IMPROVING ITS SITUATIONAL AWARENESS**
FAHRERASSISTENZSYSTEM UND VERFAHREN ZUR VERBESSERUNG DES SITUATIONSBEWUSSTSEINS
SYSTÈME D'ASSISTANCE AU CONDUCTEUR ET PROCÉDÉ D'AMÉLIORATION DE SA CONSCIENCE DE LA SITUATION

(43) Date of publication of application: 04.01.2023
(73) Proprietor: Ford Global Technologies, LLC, Dearborn, MI 48126 (US)
(72) Inventor: Jost, Gabrielle, 52382 Niederzier (DE); Benmimoun, Ahmed, 52074 Aachen (DE); Nowak, Thomas, 52457 Aldenhoven (DE); Ma, Chenhao, Canton, MI 48188 (US); Golgiri, Hamid M., Livonia, MI 48154 (US); Pak, Tony Tae-Jin, Garden City, MI 48135 (US); Elminyawi, Youssef, East Lansing, MI 48823 (US); Mishra, Anoop, 52064 Aachen (DE)
(74) Representative: Markowitz, Markus

(56) References cited:
- EP-A1- 3 276 588
- DE-A1- 102017 010 731
- DE-A1- 102017 206 973
- US-A1- 2018 211 121
- US-A1- 2019 339 706
- US-A1- 2020 250 977
- MUKHTAR AMIR ET AL: "Vehicle Detection Techniques for Collision Avoidance Systems: A Review", IEEE TRANSACTIONS ON INTELLIGENT TRANSPORTATION SYSTEMS, IEEE, PISCATAWAY, NJ, USA, vol. 16, no. 5, 1 October 2015 (2015-10-01), pages 2318 - 2338, XP011670163, ISSN: 1524-9050, [retrieved on 20150925], DOI: 10.1109/TITS.2015.2409109

## Description

### Background

According to an aspect, the invention relates to a method for improved situational awareness of an advanced driver assistance system (ADAS) in a host vehicle. According to another aspect, the invention relates to an advanced driver assistance system and to an autonomous driving system for a vehicle.

Advanced driver assistance systems in vehicles, including Valet Parking Assistance (VaPA), may provide fully automated steering and manoeuvring. Such systems use automated vehicle controls, along with camera, Lidar, radar, GPS (Global Positioning System), proximity and/or ultrasonic sensors to register, identify and interpret their surroundings.

A VaPA system identifies parking slots, navigates and parks the vehicle without user oversight or input. The system may also be able to autonomously drive the parked vehicle from a parking slot to a specified pickup location upon request by the user.

Other advanced driver assistance systems may include assisted driving in urban traffic, autonomous emergency braking, rear and front cross-traffic alerts and a reverse brake assist.

Highly automated driver assistance systems, that are intended to function without any human supervision, increase the need for the sensing system to correctly sense and interpret the environment it is moving in. An adequate understanding of the environment provides that the vehicle can operate safely.

The classical sensing and perception that is based on detecting and classifying objects which are in field of view of a camera may be falling short when compared to the performance of an average driver who besides assessing what is in his or her field of view, has a certain anticipation of upcoming events based on mere indications. As the human supervision is eliminated from the equation when addressing highly automated systems such as Automated Valet Parking, the need for these systems to build an equal situational awareness is evident, especially when targeting a performance that is at least on eye level with an average human driver.

Some automated driver assistance systems, for example as disclosed in US 2019/339706 A1, DE 10 2017 010731 A1 and DE 10 2017 206973 A1 try to evaluate the presence of shadows for anticipating other traffic participants. However, shadows are sometimes difficult to interpret due to their shape.

EP 3 276 588 A1 discloses a generic method for cross traffic detection.

### Brief Description

Accordingly, it is an object of the invention to provide a method of improving situational awareness of an advanced driver assistance system in a host vehicle that overcomes or at least mitigates the shortcomings of the prior art, or that at least provides a user with a convenient alternative.

It is a further object of the invention to provide a corresponding advanced driver assistance system (ADAS) and autonomous driving system, a corresponding computer program, and a corresponding computer-readable data carrier.

This object is achieved by the method, systems, computer program and computer-readable data carrier defined in the appended claims.

According to a first aspect, the method for improving situational awareness of an advanced driver assistance system in a host vehicle comprises the following steps:
S1 acquiring, with an image sensor, an image data stream comprising a plurality of image frames;
S2 analysing, with a vision processor, the image data stream to detect objects and lighting in the image frames;
S3 recognising, with a situation recognition engine, at least one most probable traffic situation out of a set of predetermined traffic situations taking into account the detected objects and lighting; and
S4 controlling, with a processor, the host vehicle taking into account the at least one most probable traffic situation.

In the context of this disclosure, a vision processor may be understood to be a computational unit optimized for processing image data. An embedded vision processor may be based on heterogeneous processing units comprising, for example, a scalar unit and an additional vector DSP unit for handling parallel computations for pixel processing of each incoming image.

In the past, for each type of object to be detected, traditional computer vision algorithms were handcrafted. Examples of algorithms used for detection include "Viola-Jones" or "Histogram of Oriented Gradients" (HOG). The HOG algorithm looks at the edge directions within an image to try to describe objects. Generally, these approaches still work today.

However, due to the breakthrough of deep neural networks, object detection no longer has to be a handcrafted coding exercise. Deep neural networks allow features to be learned automatically from training examples. In this regard, a neural network is considered to be "deep" if it has an input and output layer and at least one hidden middle layer. Each node is calculated from the weighted inputs from multiple nodes in the previous layer. Convolutional neural networks (CNNs) can be used for efficiently implementing deep neural networks for vision. Accordingly, a vision processor may also comprise an embedded CNN engine. Modern embedded CNN engines may be powerful enough for processing whole incoming image frames of an image stream. The benefit of processing the entire image frame is that CNN can be trained to simultaneously detect multiple objects, such as traffic participants (automobiles, pedestrians, bicycles etc.), obstacles, borders of the driving surface, road markings and traffic signs.

Taking into account the information provided by the vision processor, as well as additional information available to the advanced driver assistance system, the situation recognition engine is adapted to recognise one out of a set of predetermined traffic situations as being the best matching to the current situation. The situation recognition engine is based on deep learning/neural networks. In deterministic models, the recognized situation is precisely determined through known relationships among states and events. Probabilistic models predict the situation by calculating the probability of all possible situations based on temporal and spatial parameters. A fuzzy model consists of a finite set of fuzzy relations that form an algorithm for recognizing the situation from some finite number of past inputs and outputs. Conceptual graphs belong to the logic-based approaches, but they also benefit from the graph theory and graph algorithms.

Based on the most probable situation, recognised by the situation recognition engine, the advanced driver assistance system may adapt the current or planned driving manoeuvres.

The proposed method is not subject to the shortcomings of conventional methods identified in the above. Similar to human behaviour, experience-based indications can be taken into consideration to anticipate changes in the detected scenario before they manifest.

Instead of only relying on the detection of objects in the field-of-view, this approach considers the additional information contained in an optical image of the scene presented to allow for a better anticipation of how the scene might change in the near future. This includes anticipating the presence of other traffic participants that are not visible yet but also includes anticipating a change from a static traffic participant to a dynamic traffic participant in the near future.

In some embodiments, analysing the image data stream comprises detecting shadows in the image frames.

In particular, analysing the image data stream may comprise detecting dynamic shadows. Detecting dynamic shadows allows for easy recognition of moving traffic participants. Dynamic shadows may be detected by comparing at least a first and a second image frame of the image data stream.

Movements and/or changes in size of the dynamic shadows can be detected with reference to the surfaces the respective shadows are cast on. Directly comparing a shadow with the shape and/or other features of the underlying surface simplifies detection of dynamic shadows as it compensates changes in perspective due to movement of the host vehicle.

In some embodiments, the set of predetermined traffic situations include traffic situations comprising an out-of-sight traffic participant casting a shadow into the field-of-view of the image sensor. Traffic situations in this context may refer to situation templates, respective objects or similar data structures, as well as the "real life" traffic situation these data structures represent.

This enables the advanced driver assistance system to anticipate an out-of-sight traffic participant.

If the detected shadow is moving, a trajectory of the movement is evaluated for anticipating movement of the corresponding out-of-sight traffic participant.

In some embodiments, the set of predetermined traffic situations include traffic situations comprising a row of parking slots, wherein a plurality but not all of the parking slots are occupied by respective cars. According to the traffic situation, the cars in the occupied parking slots respectively cast a shadow into the field-of-view of the image sensor of the host vehicle. This way, an unoccupied parking slot in the row of parking slots can be identified or at least anticipated by lack of a corresponding shadow, even if the unoccupied parking slot itself is still out-of-sight or covered behind parked cars.

According to another advantageous aspect, the step of recognising at least one most probable traffic situation out of a set of predetermined traffic situations can comprise reducing a probability value relating to traffic situations comprising an object as it has been detected by the vision processor, if the detected object lacks a corresponding shadow although such shadow would be expected due to existing lighting conditions.

In some embodiments, the probability value is only reduced if the detected object lacks a corresponding shadow although all other objects detected by the vision processor in vicinity of the detected object cast a respective shadow.

In other words, shadows or rather the absence of shadows when they would be expected could be used to identify if an object that was identified by the optical sensing system is a ghost object (false positive). It should be noted, though, that this method is only applicable in case the illumination conditions support that 3D objects cast shadows.

According to another advantageous aspect, analysing the image data stream can comprise detecting artificial lighting in the image frames. Like shadows, lighting can be used as an indicator for anticipating the presence and/or a movement of a traffic participant that is out-of-view, even before it becomes visible to the image sensor.

In some embodiments, the artificial lighting being detected is dynamic, moving and/or changing size in relation to the illuminated surfaces and/or objects. Detecting dynamic lighting simplifies distinguishing between most likely relevant and most likely irrelevant lighting. Static lighting is more likely to be irrelevant.

The set of predetermined traffic situations includes traffic situations comprising a traffic participant with active vehicle lighting. The active vehicle lighting can comprise at least one out of brake lights, reversing lights, direction indicator lights, hazard warning lights, low beams and high beams. The active vehicle lighting emits the artificial lighting to be detected by the vision processor in the image frames. Vehicle lighting of other traffic participants may provide additional information to be used for understanding the environment of the host vehicle.

The set of predetermined traffic situations can include traffic situations for anticipating an out-of-sight traffic participant with active vehicle lighting being detectable in the field-of-view of the image sensor. For example, the active vehicle lighting can illuminate objects, surfaces and/or airborne particles in the field-of-view of the image sensor, which makes the vehicle lighting detectable in the image data stream.

The set of predetermined traffic situations includes traffic situations for anticipating traffic participants suddenly moving into a path of the host vehicle. The traffic situations respectively comprise a traffic participant with active vehicle lighting in the field-of-view of the image sensor. The active vehicle lighting being of a defined type, which can be identified.

According to another aspect, there is provided an advanced driver assistance system (ADAS) for a vehicle, comprising an image sensor, a vision processor, a situation recognition engine and a processor. The advanced driver assistance system is configured to carry out the method described in the above.

According to still another aspect, an autonomous driving system for a vehicle, comprising vehicle sensor apparatus, control and servo units configured to autonomously drive the vehicle, at least partially based on vehicle sensor data from the vehicle sensor apparatus, and the advanced driver assistance system described in the above.

According to yet another aspect, there is provided a computer program comprising instructions which, when the program is executed by a controller, cause the controller to carry out the method described in the above.

According to still another aspect, a computer-readable data carrier having stored thereon the computer program described in the above is provided. Said data carrier may also store a database of known traffic scenarios.

### Figures

The invention will now be described in more detail with reference to the appended figures. In the figures:
Fig. 1 shows a simplified diagram of a method according to aspects of the invention,
Fig. 2 shows a schematic example of an application of the method according to aspects of the invention.
Fig. 3 shows a second schematic example of an application of the method according to aspects of the invention.
Fig. 4 shows a third schematic example of an application of the method according to aspects of the invention.
Fig. 5 shows a fourth schematic example of an application of the method according to aspects of the invention.
Fig. 6 shows a fifth example of an application of the method according to aspects of the invention.

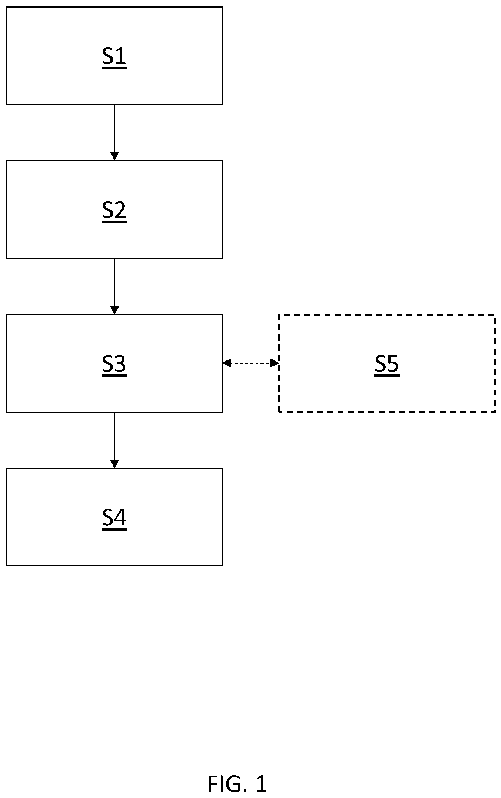

Turning to Figure 1, which shows a simplified diagram of a method for improving situational awareness of an advanced driver assistance system in a host vehicle.

The method comprises the following steps:
S1 Acquiring, with an image sensor, an image data stream comprising a plurality of image frames.
S2 Analysing, with a vision processor, the image data stream to detect objects 10, shadows 20 and/or lighting 30 in the image frames.
S3 Recognising, with a situation recognition engine, at least one most probable traffic situation out of a set of predetermined traffic situations taking into account the detected objects 10, shadows 20 and/or lighting 30.
S4 Controlling, with a processor, the host vehicle 1 taking into account the at least one most probable traffic situation.

Optionally, the method further comprises
S5 Reducing a probability value relating to traffic situations comprising an object 17 as it has been detected by the vision processor, if the detected object 17 lacks a corresponding shadow although such shadow would be expected due to existing lighting conditions. In a variant, the probability value is only reduced if all other objects 10 detected by the vision processor in vicinity of the detected object 17 cast a respective shadow 20.

The method improves and/or facilitates the situational awareness of a highly automated driver assistance system, such as in automated valet parking, by using optical detections of shadows 20 and/or light beams 30, which are cast by other traffic participants 10.

As shadows 20 and/or light beams 30 usually reach further than their source, they can be used to already anticipate the presence of other traffic participants 11 before they are physically in the field of view of the host vehicle's 1 sensors.

Additionally, a shadow analysis can be used to evaluate the presence or absence of a possible ghost object. A ghost object 17 is a wrongly detected, fake object.

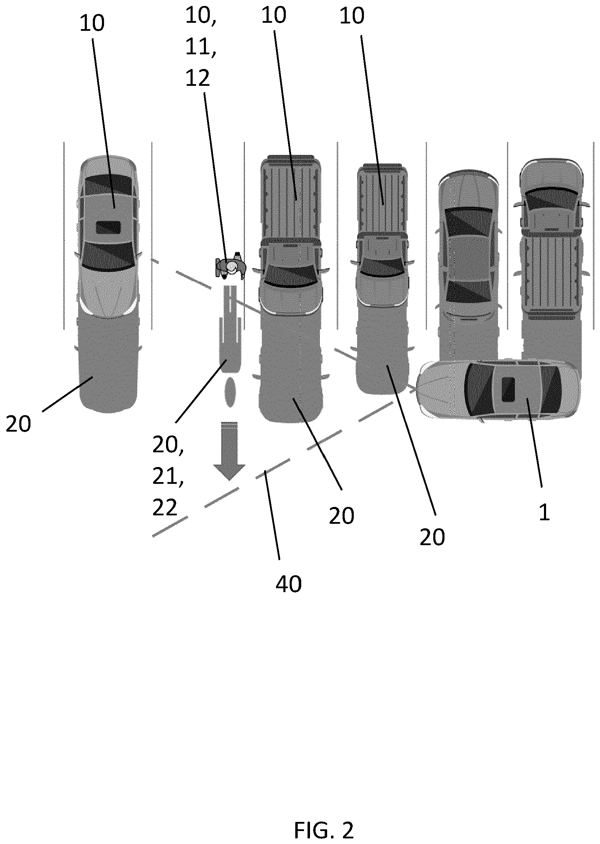

The method is further explained with regard to the respective examples of application as depicted in the following Figures 2 to 6.

Advantageously, analysing the image data stream comprises detecting shadows 20 in the image frame, as they are shown in Figures 2 to 4.

Referring now to any of the Figures 2 to 4, 3D objects 10 will usually cast a shadow 20 in one direction or another. If contrast within the image data stream is high enough, these shadows can be detected by a camera system.

Depending on the angle of the light source to the object 10,11 that casts the shadow 20, the shadow 20 might be larger than the object 10,11 that casts it.

The shadows 21 of hidden traffic participants 11 can be used to anticipate their presence, although they themselves are not in the field of view 40 of the host vehicle already.

In Figure 2, from the host vehicle's perspective, the pedestrian is not in the field of view 40 yet and therefore cannot directly be detected. The shadow 21 the pedestrian is casting, however, is already visible to the camera of the host vehicle 1 comprising the image sensor.

If the shadow is correctly identified, it can be used to anticipate that a pedestrian or other traffic participant 10 is about to cross the road in front of the host vehicle 1 in the near future. The host vehicle 1 can use this additional information to adapt its driving behaviour by a) slowing down or stopping if moving, or b) waiting until the other traffic participant has crossed the host vehicle's planned trajectory before launching.

Furthermore, as shadows can be rather unshapely and therefore their origin is sometimes hard to identify, a variant is to consider dynamic shadows 22 only. Again referring to Figure 2, as the pedestrian 12 is moving, the shape of the shadow 22 in the host vehicle's field-of-view 40 will change accordingly. In this case, there is no need to identify the shadow's 22 origin, as the fact that the shadow 22 is dynamic already indicates that it originates from a moving traffic participant 12 rather than from infrastructure or other static obstacles.

Especially in complex environments such as parking lots with many obstructing objects, this can be helpful to better understand the traffic situation and react in time to other traffic participants 10.

In addition, dynamic shadows 22 are usually simpler to detect if movements and/or changes in size of the dynamic shadows 22 are referenced to the surfaces on which the respective shadows 22 are cast on.

For enabling the advanced driver assistance system according to aspects of the invention, the set of predetermined traffic situations used for recognising the most probable traffic situation include traffic situations comprising out-of-sight traffic participants 11 casting a shadow 21 into the field-of-view 40 of the image sensor. Preferably, the set of predetermined traffic situations also include traffic situations having the shadow 21 being a moving shadow 22.

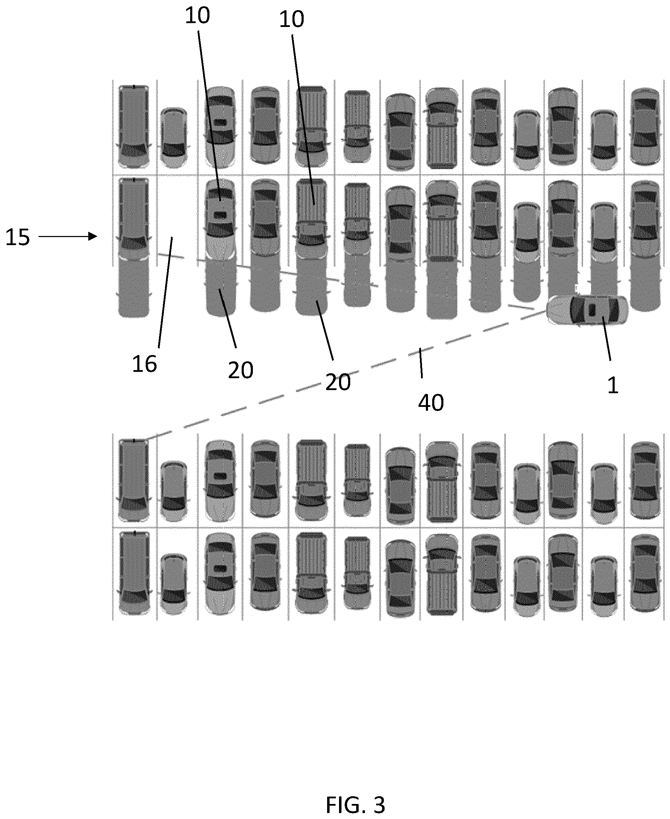

Turning to Figure 3, the set of predetermined traffic situations also includes traffic situations comprising a row 15 of parking slots, wherein a plurality but not all of the parking slots are occupied by respective cars, the cars in the occupied parking slots respectively casting a shadow 20 into the field-of-view 40 of the image sensor. An unoccupied parking slot 16 can thus be identified by lack of a corresponding shadow even if the unoccupied parking slot 16 itself is still out-of-sight.

In other words, the general shadow-based approach of detecting other traffic participants 10 before they are in the host vehicle's field-of-view as described before with regard to Figure 2, can also be used to identify empty parking slots 16 when searching in a parking lot. The contrast between a row 15 of vehicles 10 casting a shadow 20 vs. the gap without a shadow in-between could be used to identify an empty slot 16 when driving down an aisle even before reaching the particular slot.

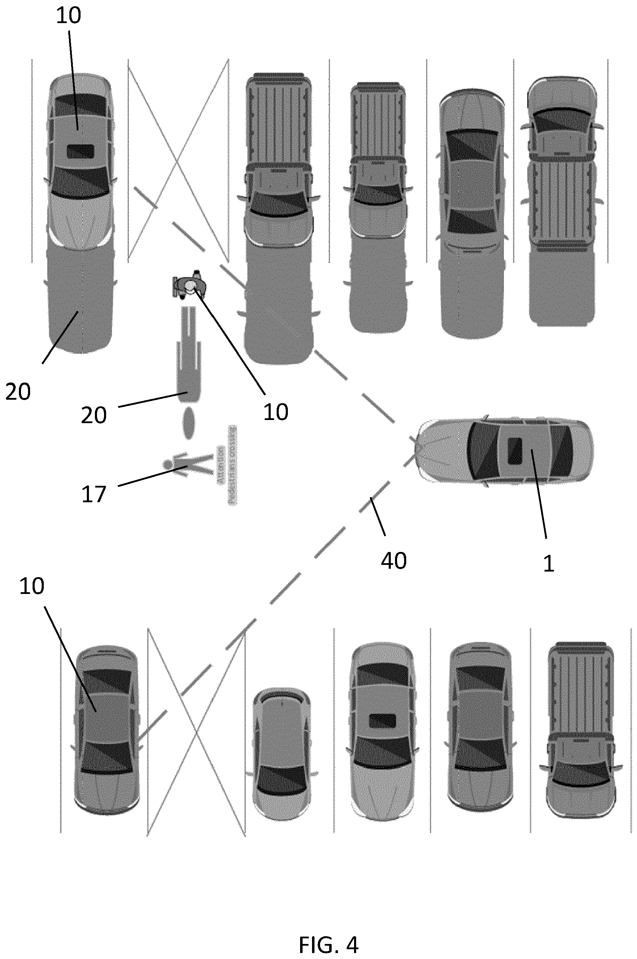

In Figure 4, a traffic situation comprising a ghost object 17 is shown. As previously stated, ghost objects are non-real objects, which falsely are detected by the respective algorithm.

Shadows, or rather the absence of shadows when they would be expected, can also be used to identify if an object that was detected by the advanced driver assistance system is a false positive, i.e. a ghost object 17. In the depicted traffic situation, the pedestrian that is entering the field-of-view 40 of the host vehicle 1 is casting a shadow 20 similar to all vehicles that are parked along the side. The street painting on the pavement directly in front of the host vehicle 1, however, does not cast any shadow as it is a mere 2D image painted on the road to raise driver's awareness of pedestrians. To increase confidence that the person drawn on the pavement is not a real person laying on the ground, the absence of a shadow could be used. Of course, this method is only applicable in case the illumination conditions support that 3D objects cast shadows.

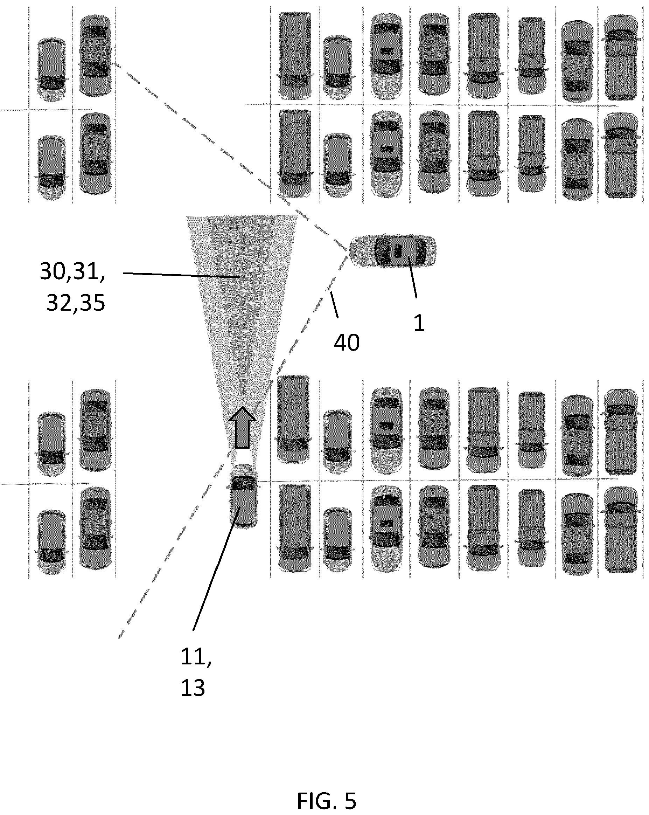

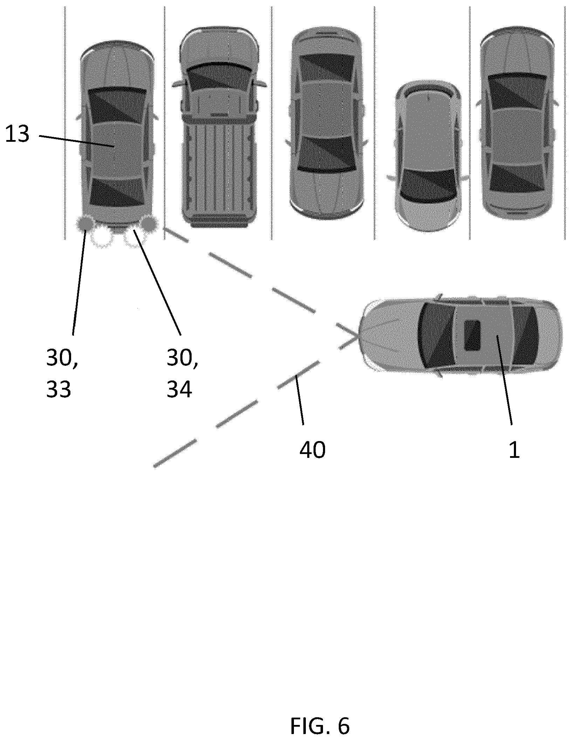

Turning to Figures 5 and 6, analysing the image data stream advantageously comprises detecting artificial lighting 30 in the image frame.

The set of predetermined traffic situations for recognising the most probable traffic situation includes traffic situations comprising a traffic participant 13 with active vehicle lighting 30. The active vehicle lighting 30, for example, can comprise brake lights 33, reversing lights 34, direction indicator lights, hazard warning lights, low beams 35 and/or high beams, respectively emitting the artificial lighting 30 to be detected in the image frames.

As shown in Figure 5, the contrast between light and shadow can be used once ambient illumination is low and other traffic participants (e.g. vehicles, motorcycles etc.) are driving with low beams 35 or high beams on.

In this case, the light beam 31 that the other traffic participant 13 is producing reaches far ahead of the traffic participant 13 itself. Especially in cases in which the other traffic participant 13 is not in the field-of-view of the host vehicle 1 yet, the low beams 35 can be detected early.

In the traffic situation depicted, the host vehicle 1 is approaching an intersection. The field of view 40 of the host vehicle 1 is empty but the low beams 35 of the other vehicle 13 are already visible within the field-of-view of the host vehicle 1, thus, indicating the presence of the other traffic participant 13.

A corresponding traffic situation of a predetermined set of traffic situations for anticipating an out-of-sight traffic participant 11 comprises the out-of-sight traffic participant 11 with active vehicle lighting 30. The active vehicle lighting 30 is detectable in the field-of-view 40 of the image sensor.

The active vehicle lighting 30 illuminates objects (e.g. other cars), surfaces (e.g. the street), and/or airborne particles (e.g. fog, rain or snow) in the field-of-view 40 of the image sensor.

The artificial lighting 30 to be detected is dynamic lighting 32, which is moving and/or changing size in relation to the surfaces and/or objects being illuminated. A misinterpretation of other non-relevant light sources that are part of the infrastructure can thereby be mitigated. In order to determine if the light beam is static or dynamic the illumination of subsequent captured images is compared to each other. In case of a dynamic beam, the illuminated area of the image would move gradually along a trajectory in a specific direction.

Turning to Figure 6, the set of predetermined traffic situations includes traffic situations for anticipating traffic participants, which may suddenly be moving into a path of the host vehicle 1. The respective traffic situations comprise a traffic participant 13 with active vehicle lighting 30 in the field-of-view of the image sensor. According to an aspect, the active vehicle lighting 30 is of a defined type, in this particular case the active vehicle lighting 30 comprises brake lights 33 and reversing lights 34.

In other words, the potential to anticipate the future behaviour of other traffic participants 13 that are already in the field-of-view can be improved by analysing the traffic participants' 13 lighting. If the host vehicle 1 is driving down the aisle of a parking lot, it can sense, if any of the vehicles has turned on its vehicle lighting via camera. A vehicle with turned on vehicle lighting could then be assumed to be about to move, although being static at the moment.

This information can help avoid collisions, as the host vehicle 1 slows down or stops in case the driver of the other vehicle does not see it. Additionally, in crowded parking lots, it could be a strategy to wait until the other vehicle has parked out to use the empty slot.

The description of embodiments of the invention is not intended to limit the scope of protection to these embodiments. The scope of protection is defined in the following claims.

## Claims

1. A method for improving situational awareness of an advanced driver assistance system in a host vehicle (1), the method comprising the following steps:
S1 acquiring, with an image sensor, an image data stream comprising a plurality of image frames;
S2 analysing, with a vision processor, the image data stream to detect objects (10) and artificial lighting (30) in the image frames,
wherein the vision processor determines whether the artificial light is dynamic lighting (32) by comparing illumination of subsequent captured images, wherein dynamic lighting (32) is moving and changing size in relation to surfaces and/or objects being illuminated;
S3 recognising, with a situation recognition engine, one most probable traffic situation out of a set of predetermined traffic situations taking into account the detected objects (10) and artificial lighting (30) based on a convolutional neural network of the situation recognition engine, wherein the situation recognition engine takes into account information received from the vision processor based on the analysed image data stream and information received from the advanced driver assistance system; and
S4 controlling, with a processor, the host vehicle (1) taking into account the one most probable traffic situation,
wherein the set of predetermined traffic situations includes traffic situations comprising:
- a traffic participant with an active vehicle lighting emitting the artificial lighting (30) being detectable in the field-of-view (40) of the image sensor,
- an out-of-sight traffic participant with an active vehicle lighting emitting the artificial lighting (30) being detectable in the field-of-view (40) of the image sensor, and
- a traffic participant moving into a path of the host vehicle (1) with active vehicle lighting (30) in the field-of-view (40) of the image sensor,
wherein the convolutional neural network has an input layer, an output layer, and at least one middle layer, wherein each node of the convolutional neural network is calculated from weighted inputs from multiple nodes in a previous layer, and wherein the convolutional neural network is trained to detect traffic participants, obstacles, borders of the driving surface, road markings, and traffic signs from the information received.

2. The method of claim 1, wherein the active vehicle lighting (30) comprises at least one out of brake lights (33), reversing lights (34), direction indicator lights, hazard warning lights, low beams (35) and high beams, emitting the artificial lighting (30) to be detected in the image frames.

3. The method of claim 2, wherein the active vehicle lighting (30) is illuminating objects, surfaces and/or airborne particles in the field-of-view (40) of the image sensor.

4. The method of claim 2, wherein, in case of the set of predetermined traffic situations including traffic situations for anticipating traffic participants suddenly moving into a path of the host vehicle (1), the active vehicle lighting is of a defined type.

5. The method of any of the preceding claims, wherein analysing the image data stream further comprises detecting shadows (20) in the image frames.

6. The method of claim 5, wherein analysing the image data stream comprises detecting dynamic shadows (22).

7. The method of claims 5 or 6, wherein the set of predetermined traffic situations include traffic situations for anticipating an out-of-sight traffic participant (11), the traffic situations comprising the out-of-sight traffic participant (11) casting a shadow (21) into the field-of-view (40) of the image sensor.

8. The method of any of claims 5 to 7, wherein the set of predetermined traffic situations include traffic situations comprising a row (15) of parking slots, wherein a plurality but not all of the parking slots are occupied by respective cars, the cars in the occupied parking slots respectively casting a shadow (20) into the field-of-view (40) of the image sensor.

9. The method of any of claims 5 to 8, wherein the step of recognising one most probable traffic situation out of a set of predetermined traffic situations comprises
S5 reducing a probability value relating to traffic situations comprising an object (17) as it has been detected by the vision processor, if the detected object (17) lacks a corresponding shadow although such shadow would be expected due to existing lighting conditions.

10. An advanced driver assistance system for a vehicle (1), comprising an image sensor, a vision processor, a situation recognition engine and a processor, the advanced driver assistance system being configured to carry out the method of any of claims 1 to 9.

11. An autonomous driving system for a vehicle (1), comprising
- vehicle sensor apparatus;
- control and servo units configured to autonomously drive the vehicle (1), at least partially based on vehicle sensor data from the vehicle sensor apparatus; and
- the advanced driver assistance system of claim 10.

12. A computer program comprising instructions which, when the program is executed by a controller, cause the controller to carry out the method of any of claims 1-9.

13. A computer-readable data carrier having stored thereon the computer program of claim 12.

## Patentansprüche

1. Verfahren zum Verbessern des Situationsbewusstseins eines erweiterten Fahrerassistenzsystems in einem Host-Fahrzeug (1), wobei das Verfahren die folgenden Schritte umfasst:
S1 Erfassen, mit einem Bildsensor, eines Bilddatenstroms, der eine Vielzahl von Bildframes umfasst;
S2 Analysieren, mit einem Vision-Prozessor, des Bilddatenstroms, um Objekte (10) und künstliche Beleuchtung (30) in den Bildframes zu erkennen,
wobei der Vision-Prozessor bestimmt, ob das künstliche Licht eine dynamische Beleuchtung (32) ist, durch Vergleichen der Beleuchtung nachfolgender aufgenommener Bilder, wobei sich die dynamische Beleuchtung (32) bewegt und die Größe in Bezug auf zu beleuchtende Oberflächen und/oder Objekte ändert;
S3 Erkennen, mit einer Situationserkennungs-Engine, einer wahrscheinlichsten Verkehrssituation aus einem Satz von vorbestimmten Verkehrssituationen unter Berücksichtigung der erkannten Objekte (10) und der künstlichen Beleuchtung (30) basierend auf einem neuronalen Faltungsnetzwerk der Situationserkennungs-Engine, wobei die Situationserkennungs-Engine Informationen, die von dem Vision-Prozessor empfangen werden, basierend auf dem analysierten Bilddatenstrom und Informationen, die von dem erweiterten Fahrerassistenzsystem empfangen werden, berücksichtigt; und
S4 Steuern, mit einem Prozessor, des Host-Fahrzeugs (1) unter Berücksichtigung der wahrscheinlichsten Verkehrssituation,
wobei der Satz vorbestimmter Verkehrssituationen Verkehrssituationen beinhaltet, die Folgendes umfassen:
- einen Verkehrsteilnehmer mit einer aktiven Fahrzeugbeleuchtung, die die künstliche Beleuchtung (30) emittiert und im Sichtfeld (40) des Bildsensors erkennbar ist,
- einen außerhalb des Sichtfelds befindlichen Verkehrsteilnehmer mit einer aktiven Fahrzeugbeleuchtung, die die künstliche Beleuchtung (30) emittiert, die im Sichtfeld (40) des Bildsensors erkennbar ist, und
- einen Verkehrsteilnehmer, der sich in einen Pfad des Host-Fahrzeugs (1) mit aktiver Fahrzeugbeleuchtung (30) im Sichtfeld (40) des Bildsensors hinein bewegt,
wobei das neuronale Faltungsnetzwerk eine Eingabeschicht, eine Ausgabeschicht und mindestens eine mittlere Schicht aufweist, wobei jeder Knoten des neuronalen Faltungsnetzwerks aus gewichteten Eingaben von mehreren Knoten in einer vorherigen Schicht berechnet wird, und wobei das neuronale Faltungsnetzwerk trainiert wird, Verkehrsteilnehmer, Hindernisse, Grenzen der Fahroberfläche, Straßenmarkierungen und Verkehrszeichen aus den empfangenen Informationen zu erkennen.

2. Verfahren nach Anspruch 1, wobei die aktive Fahrzeugbeleuchtung (30) mindestens eines aus Bremsleuchten (33), Rückfahrleuchten (34), Fahrtrichtungsanzeigeleuchten, Warnblinkleuchten, Abblendlicht (35) und Fernlicht umfasst, das die in den Bildframes zu erkennende künstliche Beleuchtung (30) emittiert.

3. Verfahren nach Anspruch 2, wobei die aktive Fahrzeugbeleuchtung (30) Objekte, Oberflächen und/oder Partikel in der Luft im Sichtfeld (40) des Bildsensors beleuchtet.

4. Verfahren nach Anspruch 2, wobei, falls der Satz von vorbestimmten Verkehrssituationen einschließlich Verkehrssituationen zum Vorhersagen von Verkehrsteilnehmern, die sich plötzlich in einen Pfad des Host-Fahrzeugs (1) hinein bewegen, die aktive Fahrzeugbeleuchtung von einem definierten Typ ist.

5. Verfahren nach einem der vorhergehenden Ansprüche, wobei das Analysieren des Bilddatenstroms ferner das Erkennen von Schatten (20) in den Bildframes umfasst.

6. Verfahren nach Anspruch 5, wobei das Analysieren des Bilddatenstroms das Erkennen dynamischer Schatten (22) umfasst.

7. Verfahren nach Anspruch 5 oder 6, wobei der Satz vorbestimmter Verkehrssituationen Verkehrssituationen zum Antizipieren eines außerhalb des Sichtbereichs befindlichen Verkehrsteilnehmers (11) beinhaltet, wobei die Verkehrssituationen umfassen, dass der außerhalb des Sichtbereichs befindliche Verkehrsteilnehmer (11) einen Schatten (21) in das Sichtfeld (40) des Bildsensors wirft.

8. Verfahren nach einem der Ansprüche 5 bis 7, wobei der Satz vorbestimmter Verkehrssituationen Verkehrssituationen beinhaltet, die eine Reihe (15) von Parktaschen umfassen, wobei eine Vielzahl, aber nicht alle der Parktaschen von jeweiligen Autos belegt sind, wobei die Autos in den belegten Parktaschen jeweils einen Schatten (20) in das Sichtfeld (40) des Bildsensors werfen.

9. Verfahren nach einem der Ansprüche 5 bis 8, wobei der Schritt des Erkennens einer wahrscheinlichsten Verkehrssituation aus einem Satz von vorbestimmten Verkehrssituationen Folgendes umfasst:
S5 Reduzieren eines Wahrscheinlichkeitswerts in Bezug auf Verkehrssituationen, die ein Objekt (17) umfassen,
wie es durch den Vision-Prozessor erkannt wurde, falls dem erkannten Objekt (17) ein entsprechender Schatten fehlt, obwohl ein solcher Schatten aufgrund bestehender Beleuchtungsbedingungen erwartet würde.

10. Erweitertes Fahrerassistenzsystem für ein Fahrzeug (1), das einen Bildsensor, einen Vision-Prozessor, eine Situationserkennungs-Engine und einen Prozessor umfasst, wobei das erweiterte Fahrerassistenzsystem dazu ausgelegt ist, das Verfahren nach einem der Ansprüche 1 bis 9 auszuführen.

11. Autonomes Fahrsystem für ein Fahrzeug (1), das Folgendes umfasst:
- Fahrzeugsensorvorrichtung;
- Steuer- und Servoeinheiten, die dazu ausgelegt sind, das Fahrzeug (1) autonom zu fahren, zumindest teilweise basierend auf Fahrzeugsensordaten von der Fahrzeugsensorvorrichtung; und
- Fortgeschrittenes Fahrerassistenzsystem nach Anspruch 10.

12. Computerprogramm, das Anweisungen umfasst, die, wenn das Programm durch eine Steuerung ausgeführt wird, die Steuerung veranlassen, das Verfahren nach einem der Ansprüche 1-9 auszuführen.

13. Computerlesbarer Datenträger, auf dem das Computerprogramm nach Anspruch 12 gespeichert ist.

## Revendications

1. Procédé d'amélioration de la conscience de la situation d'un système avancé d'assistance au conducteur dans un véhicule hôte (1), le procédé comprenant les étapes suivantes :
S1 l'acquisition, avec un capteur d'images, d'un flux de données d'images comprenant une pluralité de trames d'images ;
S2 l'analyse, avec un processeur de vision, du flux de données d'images pour détecter des objets (10) et un éclairage (30) artificiel dans les trames d'images,
dans lequel le processeur de vision détermine si la lumière artificielle est un éclairage dynamique (32) en comparant l'illumination d'images capturées suivantes, l'éclairage dynamique (32) se déplaçant et changeant de taille par rapport à des surfaces et/ou des objets qui sont illuminés ;
S3 la reconnaissance, avec un moteur de reconnaissance de situation, d'une situation de circulation la plus probable parmi un ensemble de situations de circulation prédéterminées en tenant compte des objets détectés (10) et de l'éclairage (30) artificiel sur la base d'un réseau neuronal convolutif du moteur de reconnaissance de situation, le moteur de reconnaissance de situation tenant compte d'informations reçues en provenance du processeur de vision sur la base du flux de données d'images analysées et des informations reçues en provenance du système avancé d'assistance au conducteur ; et
S4 la commande, avec un processeur, du véhicule hôte (1) en tenant compte de la situation de circulation la plus probable,
dans lequel l'ensemble de situations de circulation prédéterminées inclut des situations de circulation comprenant :
- un participant à la circulation avec un éclairage de véhicule actif émettant l'éclairage (30) artificiel étant détectable dans le champ de vision (40) du capteur d'images,
- un participant à la circulation hors de vue avec un éclairage de véhicule actif émettant l'éclairage (30) artificiel étant détectable dans le champ de vision (40) du capteur d'images, et
- un participant à la circulation se déplaçant dans une trajectoire du véhicule hôte (1) avec un éclairage (30) de véhicule actif dans le champ de vision (40) du capteur d'images,
dans lequel le réseau neuronal convolutif a une couche d'entrée, une couche de sortie, et au moins une couche intermédiaire, dans lequel chaque nœud du réseau neuronal convolutif est calculé à partir d'entrées pondérées en provenance de nœuds multiples dans une couche précédente, et dans lequel le réseau neuronal convolutif est entraîné à détecter des participants à la circulation, des obstacles, des limites de la surface de conduite, des marquages routiers, et des panneaux de signalisation à partir des informations reçues.

2. Procédé selon la revendication 1, dans lequel l'éclairage (30) de véhicule actif comprend au moins un élément parmi des feux de stop (33), des feux de recul (34), des clignotants, des feux de détresse, des feux de croisement (35) et des feux de route, émettant l'éclairage (30) artificiel à détecter dans les trames d'images.

3. Procédé selon la revendication 2, dans lequel l'éclairage (30) de véhicule actif illumine des objets, des surfaces et/ou des particules en suspension dans l'air dans le champ de vision (40) du capteur d'images.

4. Procédé selon la revendication 2, dans lequel, dans le cas où l'ensemble de situations de circulation prédéterminées inclut des situations de circulation pour anticiper que des participants à la circulation qui se déplacent soudainement dans une trajectoire du véhicule hôte (1), l'éclairage de véhicule actif est d'un type défini.

5. Procédé selon l'une quelconque des revendications précédentes, dans lequel l'analyse du flux de données d'images comprend en outre la détection d'ombres (20) dans les trames d'images.

6. Procédé selon la revendication 5, dans lequel l'analyse du flux de données d'images comprend la détection d'ombres dynamiques (22).

7. Procédé selon la revendication 5 ou la revendication 6, dans lequel l'ensemble de situations de circulation prédéterminées inclut des situations de circulation pour anticiper un participant à la circulation hors de vue (11), les situations de circulation comprenant le fait que le participant à la circulation hors de vue (11) projette une ombre (21) dans le champ de vision (40) du capteur d'images.

8. Procédé selon l'une quelconque des revendications 5 à 7, dans lequel l'ensemble de situations de circulation prédéterminées inclut des situations de circulation comprenant une rangée (15) de places de stationnement, dans lequel une pluralité mais pas toutes les places de stationnement sont occupées par des voitures respectives, les voitures sur les places de stationnement occupées projetant respectivement une ombre (20) dans le champ de vision (40) du capteur d'images.

9. Procédé selon l'une quelconque des revendications 5 à 8, dans lequel l'étape consistant à reconnaître une situation de circulation la plus probable parmi un ensemble de situations de circulation prédéterminées comprend
S5 la réduction d'une valeur de probabilité relative à des situations de circulation comprenant un objet (17) tel qu'il a été détecté par le processeur de vision, si l'objet détecté (17) ne présente pas d'ombre correspondante bien qu'une telle ombre serait attendue en raison des conditions d'éclairage existantes.

10. Système avancé d'assistance au conducteur pour un véhicule (1), comprenant un capteur d'images, un processeur de vision, un moteur de reconnaissance de situation et un processeur, le système avancé d'assistance au conducteur étant configuré pour effectuer le procédé selon l'une quelconque des revendications 1 à 9.

11. Système de conduite autonome pour un véhicule (1), comprenant
- appareil capteur de véhicule ;
- des unités de commande et à servo configurées pour conduire de manière autonome le véhicule (1), au moins partiellement sur la base de données de capteur de véhicule en provenance de l'appareil capteur de véhicule ; et
- le système avancé d'assistance au conducteur selon la revendication 10.

12. Programme informatique comprenant des instructions qui, lorsque le programme est exécuté par un dispositif de commande, amènent le dispositif de commande à effectuer le procédé selon l'une quelconque des revendications 1 à 9.

13. Support de données lisible par ordinateur sur lequel est stocké le programme informatique selon la revendication 12.
